# EUROPÄISCHE PATENTSCHRIFT

(11) **EP 3 562 883 B1**
(45) Veröffentlichungstag und Bekanntmachung des Hinweises auf die Patenterteilung: **24.02.2021**
(21) Anmeldenummer: 17821922.6
(22) Anmeldetag: 22.12.2017
(51) Int. Cl.: C08L 69/00

(54) **ZUSAMMENSETZUNG UND THERMOPLASTISCHE FORMMASSE MIT REDUZIERTEM GLANZ UND GUTER CHEMIKALIENBESTÄNDIGKEIT**
COMPOSITION AND THERMOPLASTIC MOLDING COMPOUND HAVING REDUCED GLOSS AND GOOD CHEMICAL RESISTANCE
COMPOSITION ET POUDRE À MOULER THERMOPLASTIQUE À BRILLANCE RÉDUITE ET BONNE RÉSISTANCE AUX PRODUITS CHIMIQUES

(30) Priorität: 28.12.2016 EP 16207053
(43) Veröffentlichungstag der Anmeldung: 06.11.2019
(73) Patentinhaber: Covestro Intellectual Property GmbH & Co. KG, 51373 Leverkusen (DE)
(72) Erfinder: SEIDEL, Andreas, 41542 Dormagen (DE); HOBEIKA, Sven, 42699 Solingen (DE); HUFEN, Ralf, 47239 Duisburg (DE); ECKEL, Thomas, 41540 Dormagen (DE)
(74) Vertreter: Levpat
(86) Internationale Anmeldenummer: PCT/EP2017/084282
(87) Internationale Veröffentlichungsnummer: WO 2018/122138

(56) Entgegenhaltungen:
- EP-B1- 0 549 205
- CN-A- 102 051 034
- US-A- 4 885 335
- US-A1- 2008 194 756

## Beschreibung

Die vorliegende Erfindung betrifft eine Zusammensetzung, insbesondere eine Polycarbonat-Zusammensetzung, zur Erzeugung einer thermoplastischen Formmasse, ein Verfahren zur Herstellung der thermoplastischen Formmasse, die Formmasse selbst, die Verwendung der Zusammensetzung oder Formmasse zur Herstellung von Formkörpern und die Formkörper selbst.

Polycarbonat-Zusammensetzungen sind seit langem bekannt und aus diesen Materialien werden für eine Vielzahl von Anwendungen Formkörper hergestellt, beispielsweise im Automobilbereich, für Schienenfahrzeuge, für den Bausektor, im Bereich Elektro/Elektronik und bei Haushaltsgeräten. Durch Variation der Menge und Art der Rezepturbestandteile lassen sich die Zusammensetzungen und damit auch die hergestellten Formkörper in weiten Bereichen hinsichtlich ihrer thermischen, rheologischen und mechanischen Eigenschaften an die Anforderungen der jeweiligen Anwendung anpassen.

Neben den genannten Eigenschaften ist für viele Anwendungen im Bereich unlackierter Bauteile, besonders im Automobilbereich, eine matte Oberflächenanmutung der beispielsweise im Spritzgussverfahren hergestellten Formkörper wünschenswert. Außerdem ist es aufgrund einer fehlenden schützenden Lackschicht wichtig, dass die Formkörper eine gute Beständigkeit gegenüber Chemikalieneinfluss aufweisen.

In zahlreichen Dokumenten wird offenbart, dass durch Einsatz von Copolymeren mit funktionellen Gruppen eine Reduzierung des Oberflächenglanzes erreicht werden kann.

DE 3413751 A1 offenbart thermoplastische Formmassen enthaltend Polycarbonat, Pfropfpolymerisate, kautschukfreie Copolymerisate und gegebenenfalls Copolymerkautschuke sowie gegebenenfalls übliche Additive, die dadurch gekennzeichnet sind, dass die kautschukfreien Copolymerisate Epoxidverbindungen einpolymerisiert enthalten. Die aus den Formmassen hergestellten Formkörper zeichnen sich durch eine hohe Temperaturbelastungsgrenze, verbesserte Wärmeformbeständigkeit bei guter Zähigkeit und eine homogene matte Oberflächenqualität aus.

EP 1 069 156 B1 offenbart flammwidrige thermoplastische Zusammensetzungen enthaltend Polycarbonat, Styrol-Pfropfpolymer, Styrol-Copolymer, SAN-gepfropftes Polycarbonat oder Polycarbonat-gepfropftes SAN und Phosphorsäureester. Die Zusammensetzungen weisen eine verbesserte Flammwidrigkeit und verbesserte mechanische Eigenschaften auf. Diese Zusammensetzungen eignen sich für Gehäuse elektrischer bzw. elektronischer Geräte.

US 4885335 A offenbart Zusammensetzungen enthaltend Polycarbonat, ein Acrylnitril-Styrol-Acrylat Copolymer und ein Glycidylmethacrylat Copolymer zur Glanzreduktion.

EP 0 375 941 A1 offenbart einen Thermoplasten mit guten physikalischen Eigenschaften aus Polycarbonat, ABS und einem Glycidylmethacrylat Copolymer. Die Formkörper weisen einen geringen Oberflächenglanz auf.

EP 0 549 205 B1 offenbart Polycarbonatharz-Zusammensetzungen mit einem geringen Glanz und einer hervorragenden mechanischen Festigkeit. Die Zusammensetzungen enthalten Polycarbonat, ein Styrolharz, ein Additionspolymer mit Einheiten, die von Glycidylmethacrylat abgeleitet sind und eine organische Säure.

Es wird außerdem beschrieben, wie durch den Einsatz funktioneller Gruppen eine veränderte Phasenstruktur und als Folge davon ein verbessertes Eigenschaftsprofil erreicht werden kann.

So offenbart EP 1 854 842 B1 Styrolharz-Zusammensetzungen enthaltend Polycarbonat, ein Harz auf Styrolbasis, beispielsweise ABS, ein modifiziertes Polymer auf Styrolbasis enthaltend Monomereinheiten auf Vinylbasis mit funktionellen Gruppen. Die Zusammensetzungen eignen sich für die Spritzgussverarbeitung, weisen exzellente mechanische Eigenschaften, Fließfähigkeit, Chemikalienbeständigkeit und Galvanisierbarkeit auf und lassen sich leicht flammwidrig ausrüsten.

In den Dokumenten aus dem Stand der Technik findet sich aber keine Offenbarung, wie das gesamte für unlackierte Anwendungen notwendige Eigenschaftsprofil erreicht werden kann, nämlich eine matte Oberflächenanmutung und gleichzeitig eine gute Chemikalienbeständigkeit.

Es war daher wünschenswert, eine Zusammensetzung für die Herstellung einer Formmasse bereitzustellen, aus denen sich Formkörper produzieren lassen, die auch ohne Oberflächenlackierung einen geringen Oberflächenglanz, bevorzugt auch bei verschiedenen Verarbeitungstemperaturen und eine sehr gute Beständigkeit gegenüber Chemikalien aufweisen.

Als Maß für die Chemikalienbeständigkeit kann die Spannungsriss-Beständigkeit (ESC) in Rapsöl bei Raumtemperatur gemäß DIN EN ISO 22088 (Version von 2006) dienen. Bevorzugt soll bei einer externen Randfaserdehnung von 2,4 % die Zeit bis zum Bruchversagen mindestens 15 Stunden, weiter bevorzugt mindestens 24 Stunden betragen.

Es wurde nun überraschenderweise gefunden, dass eine Zusammensetzung und eine daraus hergestellte thermoplastische Formmasse, wobei die Zusammensetzung folgende Bestandteile enthält oder aus diesen besteht,
A) 30 bis 90 Gew.-%, bevorzugt 40 bis 80 Gew.-%, besonders bevorzugt 50 bis 75 Gew.-% mindestens eines Polymers ausgewählt aus der Gruppe bestehend aus aromatischem Polycarbonat und aromatischem Polyestercarbonat,
B) 5 bis 65 Gew.-%, bevorzugt 10 bis 50 Gew.-%, besonders bevorzugt 15 bis 45 Gew.-% kautschukmodifiziertes Vinyl(co)polymerisat hergestellt im Massepolymerisationsverfahren, das frei ist von Epoxidgruppen,
C) 0,5 bis 10 Gew.-%, bevorzugt 1 bis 8 Gew.-%, besonders bevorzugt 2 bis 7 Gew.-% eines Block- oder Pfropfpolymers enthaltend auf Styrol und mindestens einem Epoxidgruppen-haltigem Vinylmonomer zurückgehende Strukturelemente,
D) 0 bis 20 Gew.-%, bevorzugt 0,1 bis 15 Gew.-%, besonders bevorzugt 0,2 bis 10 Gew.-% eines oder mehrerer weiterer Additive,
wobei die Komponente C ein Gewichtsverhältnis von auf Styrol zu auf Epoxidgruppen-haltigem Vinylmonomer zurückgehenden Strukturelementen von 100:1 bis 1:1, bevorzugt von 10:1 bis 1:1, weiter bevorzugt von 5:1 bis 1:1, am meisten bevorzugt von 3:1 bis 1:1 aufweist,
das gewünschte Eigenschaftsprofil hat.

Die Komponente B besteht aus kautschukhaltigen Pfropfpolymerisaten, hergestellt im Massepolymerisationsverfahren, als Komponente B1 und optional kautschukfreie Vinyl(Co)Polymerisate als Komponente B2.

Für manche Anwendungen, beispielsweise im Automobilinnenbereich, ist es weiterhin wünschenswert, dass die Formmassen einen geringen Anteil an flüchtigen Verbindungen aufweisen. Besonders ist es wünschenswert, dass die Formmassen einen geringen Gehalt an monomeren Bisphenolen, besonders an monomerem Bisphenol A enthalten. Der Gehalt an monomeren Bisphenolen soll vorzugsweise weniger als 25 ppm, weiter bevorzugt weniger als 20 ppm und besonders bevorzugt weniger als 15 ppm betragen.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Die thermoplastischen Polycarbonate einschließlich der thermoplastischen, aromatischen Polyestercarbonate haben mittlere Molekulargewichte Mw bestimmt durch GPC (Gelpermeationschromatographie in Methylenchlorid mit Polycarbonat als Standard) von 15.000 g/mol bis 50.000 g/mol, bevorzugt von 20.000 g/mol bis 35.000 g/mol, besonders bevorzugt von 23.000 g/mol bis 33.000 g/mol.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 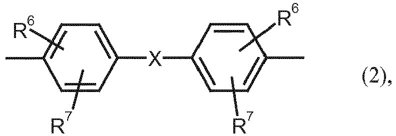 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

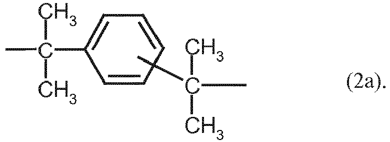

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimcthyl-4-hydroxyphcnyl)-mcthan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan (Bisphenol A), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).
Insbesondere bevorzugt ist 2,2-Bis-(4-hydroxyphenyl)-propan (Bisphenol-A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl] -propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Die als Komponente A erfindungsgemäß geeigneten Polycarbonate weisen eine OH-Endgruppenkonzentration von 50 bis 2000 ppm, bevorzugt 200 bis 1000 ppm, besonders bevorzugt 300 bis 700 ppm auf.

Die Bestimmung der OH-Endgruppenkonzentration erfolgt photometrisch gemäß Horbach, A.; Veiel, U.; Wunderlich, H., Makromolekulare Chemie 1965, Band 88, S. 215-231.

Vorzugsweise beträgt das stöchiometrische Verhältnis der Epoxidgruppen der Komponente C zu den phenolischen OH-Gruppen der Komponente A wenigstens 1 : 1, insbesondere wenigstens 1,5 : 1, vorzugsweise wenigstens 2:1.

Am meisten bevorzugt kommt als Komponente A aromatisches Polycarbonat auf Basis von Bisphenol A zum Einsatz.

### Komponente B

Die Komponente B besteht aus B1 und optional B2. Falls die Komponente B aus B1 und B2 besteht, so beträgt der Anteil von B1 in der Komponente B bevorzugt mindestens 50 Gew.-%, besonders bevorzugt mindestens 80 Gew.-%. Sowohl die Komponente B1 als auch die Komponente B2 enthalten keine Epoxidgruppen.

### Komponente B1

Als Komponente B1 enthalten die erfindungsgemäßen Zusammensetzungen kautschukhaltige Pfropfpolymerisate, hergestellt im Massepolymerisationsverfahren. Es kann ein solches Pfropfpolymerisat oder eine Mischung aus mehreren Pfropfpolymerisaten eingesetzt werden. Hierbei handelt es sich in bevorzugter Ausführungsform um Pfropfpolymerisate von
B1.1) 75 bis 95 Gew.-%, vorzugsweise 80 bis 93 Gew.-%, besonders bevorzugt 85 bis 92 Gew.- %, ganz besonders bevorzugt 87 bis 93 Gew.-%, bezogen auf die Komponente B1, einer Mischung aus
B1.1.1) 65 bis 85 Gew.-%, bevorzugt 70 bis 80 Gew.-%, bezogen auf die Mischung B.1.1, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und Methacrylsäure-(C1-C8)-Alkylester (wie beispielsweise Methyl-methacrylat, Ethylmethacrylat) und
B1.1.2) 15 bis 35 Gew.-%, bevorzugt 20 bis 30 Gew.-% bezogen auf die Mischung B1.1, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat) und Derivate (wie beispielsweise Anhydride und Imide) ungesättigter Carbonsäuren (beispielsweise Maleinsäureanhydrid und N-Phenyl-Maleinimid)
   auf
B1.2) 25 bis 5 Gew.-%, vorzugsweise 20 bis 7 Gew.-%, besonders bevorzugt 15 bis 8 Gew.-%, ganz besonders bevorzugt 13 bis 7 Gew.-%, bezogen auf die Komponente B1, wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Glasübergangstemperatur wird, sofern in der vorliegenden Anmeldung nicht ausdrücklich anders beschrieben, für alle Komponenten mittels dynamischer Differenzkalorimetrie (DSC) nach DIN EN 61006 (Version von 1994) bei einer Heizrate von 10 K/min mit Bestimmung der Tg als Mittelpunkttemperatur (Tangentenmethode) ermittelt.

Die Pfropfpartikel in der Komponente B1 weisen bevorzugt eine mittlere Teilchengröße (D50-Wert) von 0,1 bis 10 µm, vorzugsweise von 0,3 bis 2 µm, besonders bevorzugt von 0,4 bis 1,5 µm auf.

Die Pfropfpartikelteilchengrößenverteilung und daraus abgeleitete Werte werden mittels Ultrazentrifugenmessung (W. Scholtan, H. Lange, Kolloid, Z. und Z. Polymere 250 (1972), 782-796) bestimmt.

Bevorzugte Monomere B1.1.1 sind ausgewählt aus mindestens einem der Monomere Styrol, α-Methylstyrol und Methylmethacrylat, bevorzugte Monomere B1.1.2 sind ausgewählt aus mindestens einem der Monomere Acrylnitril, Maleinsäureanhydrid, Butylacrylat und Methylmethacrylat.
Besonders bevorzugte Monomere sind B1.1.1 Styrol und B1.1.2 Acrylnitril, optional in Mischung mit Butylacrylat.

Für die Pfropfpolymerisate B1 geeignete Pfropfgrundlagen B1.2 sind beispielsweise Dienkautschuke und Dien-Vinyl-Blockcopolymer-Kautschuke sowie Mischungen aus solchen Kautschuken.
Bevorzugte Pfropfgrundlagen B1.2 sind Dienkautschuke (z.B. auf Basis von Butadien oder Isopren), Dien-Vinyl-Blockcopolymer-Kautschuke (z.B. auf Basis von Butadien- und Styrolblöcken), Copolymerisate von Dienkautschuken mit weiteren copolymerisierbaren Monomeren (z.B. gemäß B1.1.1 und B1.1.2) und Mischungen aus den zuvor genannten Kautschuktypen. Besonders bevorzugt als Pfropfgrundlage B1.2 sind Polybutadienkautschuk, Styrol-Butadien-Blockcopolymerkautschuke und Mischungen von Styrol-Butadien-Blockcopolymerkautschuken mit reinem Polybutadienkautschuk.

Der Gelanteil der Pfropfpolymerisate B1 beträgt vorzugsweise 10 bis 35 Gew.-%, besonders bevorzugt 15 bis 30 Gew.-%, ganz besonders bevorzugt 17 bis 23 Gew.-% (gemessen in Aceton).
Besonders bevorzugte Polymerisate B1 sind z.B. ABS-Polymerisate hergestellt durch radikalische Polymerisation, welche in bevorzugter Ausfuhrungsform bis zu 10 Gew.-%, besonders bevorzugt bis zu 5 Gew.-%, ganz besonders bevorzugt 2 bis 5 Gew.-%, jeweils bezogen auf das Pfropfpolymerisat B1, an n-Butylacrylat als Bestandteil von B1.1.2 enthalten.

Das Pfropfpolymerisat B1 umfasst im Allgemeinen herstellungsbedingt freies, d.h. nicht chemisch an die Kautschukgrundlage gebundenes Copolymerisat aus B1.1.1 und B1.1.2, welches sich dadurch auszeichnet, dass es in geeigneten Lösungsmittel (z.B. Aceton) gelöst werden kann.

Bevorzugt enthält die Komponente B1 freies Copolymerisat aus B1.1.1 und B1.1.2, welches ein gewichtsgemitteltes Molekulargewicht (Mw), bestimmt per Gelpermeationschromatographie mit Polystyrol als Standard, von bevorzugt 50000 bis 250000 g/mol, besonders bevorzugt von 70000 bis 200000 g/mol, besonders bevorzugt von 80000 bis 170000 g/mol aufweist.

### Komponente B2

Die Zusammensetzung kann als weitere Komponente B2 optional kautschukfreie Vinyl(Co)Polymerisate, bevorzugt von mindestens einem Monomeren aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren enthalten.

Es kann ein solches kautschukfreies Vinyl(Co)Polymerisat oder eine Mischung aus mehreren kautschukfreien Vinyl(Co)Polymerisaten eingesetzt werden.

Insbesondere geeignet sind als Komponente B2 (Co)Polymerisate aus
B2.1 50 bis 99 Gew.-%, bevorzugt 65 bis 85 Gew.-%, besonders bevorzugt 70 bis 80 Gew.-% bezogen auf das (Co)Polymerisat B2 mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und
B2.2 1 bis 50 Gew.-%, bevorzugt 15 bis 35 Gew.-%, besonders bevorzugt 20 bis 30 Gew.-% bezogen auf das (Co)Polymerisat B2 mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate B2 sind harzartig, thermoplastisch und kautschukfrei. Besonders bevorzugt ist das Copolymerisat aus B2.1 Styrol und B2.2 Acrylnitril.

Derartige (Co)Polymerisate B2 sind bekannt und lassen sich durch radikalische Polymerisation, insbesondere durch Massepolymerisation herstellen.

Die (Co)Polymerisate B2 besitzen ein gewichtsgemitteltes Molekulargewicht (Mw), bestimmt per Gelpermeationschromatographie mit Polystyrol als Standard, von bevorzugt 50000 bis 2500000 g/mol, besonders bevorzugt von 70000 bis 200000 g/mol, besonders bevorzugt von 80000 bis 170000 g/mol.

### Komponente C

Die Zusammensetzung enthält als Komponente C mindestens ein Block- oder Pfropfpolymer enthaltend Struktureinheiten abgeleitet von Styrol und Struktureinheiten abgeleitet von mindestens einem Epoxidgruppen enthaltenden Vinylmonomeren.

Unter Epoxidgruppen werden im Rahmen der vorliegenden Anmeldung folgende Struktureinheiten verstanden: 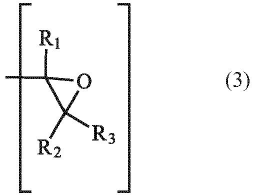 wobei R1, R2 und R3 unabhängig voneinander Wasserstoff oder Methyl sind, bevorzugt sind mindestens zwei der Reste R1, R2 und R3 Wasserstoff, besonders bevorzugt sind alle Reste R1, R2 und R3 Wasserstoff.

Solche zur Herstellung der Komponente C einzusetzende Vinylmonomere enthaltend Epoxidgruppen sind beispielsweise Glycidylacrylat, Glycidylmethacrylat, Glycidylethacrylat, Glycidylitaconat, Allylglycidylether, Vinylglycidylether, Vinylbenzylglycidylether oder Propenylglycidylether.

Insbesondere bevorzugt ist Glycidylmethacrylat.

In einer bevorzugten Ausführungsform enthält Komponente C ein Polymer hergestellt durch Copolymerisation von Styrol und mindestens einem mit Styrol copolymerisierbaren Epoxidgruppen enthaltenden Vinylmonomeren.

In einer bevorzugten Ausführungsform wird bei der Herstellung dieser Polymere gemäß Komponente C neben Styrol und dem Epoxidgruppen enthaltenden Vinylmonomeren mindestens ein weiteres mit diesen Monomeren copolymerisierbares Epoxidgruppen-freies Vinylmonomer eingesetzt. Diese weiteren Vinylmonomere sind ausgewählt aus der Gruppe bestehend aus Vinylaromaten (wie beispielsweise α-Methylstyrol), kernsubstituierten Vinylaromaten (wie beispielsweise p-Methylstyrol, p-Chlorstyrol), (Meth)Acrylsäure-(C1-C8)-Alkylestern (wie beispielsweise Methylmethacrylat, n-Butylacrylat, tert.-Butylacrylat), Vinylcyaniden (wie beispielsweise Acrylnitril und Methacrylnitril), ungesättigten Carbonsäuren (beispielsweise Maleinsäure und N-Phenyl-Maleinsäure) und Derivaten ungesättigter Carbonsäuren (beispielsweise Maleinsäureanhydrid und N-Phenyl-Maleinimid).

Insbesondere bevorzugt wird als weiteres copolymerisierbares Vinylmonomer Acrylnitril eingesetzt.

In einer weiter bevorzugten Ausführungsform enthält die Komponente C mindestens ein Polymer enthaltend von Styrol, Acrylnitril und Glycidylmethacrylat abgeleitete Struktureinheiten, in besonders bevorzugter Ausführungsform ein Polymer bestehend aus von Styrol, Acrylnitril und Glycidylmethacrylat abgeleitete Struktureinheiten.

Falls neben von Styrol abgeleiteten und von dem Epoxidgruppen-haltigem Vinylmonomeren abgeleiteten Struktureinheiten zusätzlich von einem weiteren Epoxidgruppen-freien Vinylmonomeren abgeleitete Struktureinheiten wie oben beschrieben in der Komponente C enthalten sind, so liegt das Gewichtsverhältnis zwischen den von Styrol abgeleiteten Struktureinheiten und den von dem weiteren Vinylmonomeren abgeleiteten Struktureinheiten im Bereich von 99:1 bis 50:50, bevorzugt im Bereich von 85:15 bis 60:40.

In einer weiteren Ausführungsform enthält die Komponente C von Styrol, Acrylnitril und Glycidylmethacrylat abgeleitete Struktureinheiten, wobei das Gewichtsverhältnis der von Styrol abgeleiteten Struktureinheiten zu von Acrylnitril abgeleiteten Struktureinheiten 99:1 bis 50:50, bevorzugt 85:15 bis 60:40 beträgt.

In einer bevorzugten Ausführungsform enthält die Komponente C ein Polymer hergestellt durch Copolymerisation aus Styrol, Acrylnitril und Glycidylmethacrylat, wobei das Gewichtsverhältnis von Styrol zu Acrylnitril 99:1 bis 50:50, bevorzugt 85:15 bis 60:40 beträgt.

Bei der Herstellung der Komponente C sind bevorzugt solche Bedingungen einzuhalten, dass eine Hydrolyse der Epoxidgruppen zumindest weitgehend vermieden wird. Geeignete und bevorzugte Bedingungen hierfür sind beispielsweise niedrige Gehalte an polaren Lösungsmitteln wie Wasser, Alkohol, Säuren oder Basen und Arbeiten in Lösungsmitteln aus der Gruppe der organischen Kohlenwasserstoffe, die gegenüber Epoxidgruppen inert sind, wie z.B. Toluol, Ethylbenzol, Xylol, hochsiedende Aliphaten, Ester oder Ether.

Die Block- oder Pfropfpolymere werden beispielsweise hergestellt durch radikalisch initiierte Polymerisation von Styrol, mindestens einem Epoxidgruppen enthaltenden Vinylmonomeren und optional weiteren copolymerisierbaren epoxidfreien Vinylmonomeren wie oben genannt in Anwesenheit eines Polymers ausgewählt aus der Gruppe bestehend aus Polycarbonat, Polyester, Polyestercarbonat, Polyolefin, Polyacrylat und Polymethacrylat.

Diese Polymere können ebenfalls Epoxidgruppen enthalten, welche im Falle der Polyolefine, Polyacrylate und Polymethacrylate bevorzugt durch Copolymerisation mit Epoxidgruppen enthaltenden Vinylmonomeren erhalten werden.

In einer besonders bevorzugten Ausführungsform kommt ein Block- oder Pfropfpolymer zum Einsatz hergestellt durch radikalisch initiierte Polymerisation von Styrol, Glycidylmethacrylat und Acrylnitril in Anwesenheit eines Polycarbonats, wobei Styrol und Acrylnitril in einem Gewichtsverhältnis von 85:15 bis 60:40 eingesetzt werden.

Derartige Block- oder Pfropfpolymeren werden beispielsweise erhalten, indem das oben genannte Polymer ausgewählt aus der Gruppe bestehend aus Polycarbonat, Polyester, Polyestercarbonat, Polyolefin, Polyacrylat und Polymethacrylat in der Monomerenmischung aus Styrol und optional mit Styrol copolymerisierbaren Vinylmonomeren, darunter optional und bevorzugt auch Epoxidgruppen enthaltendes Vinylmonomer aufgequollen oder gelöst wird, wobei zu diesem Zwecke optional auch ein bevorzugt nicht-wässriges Colösungmittel eingesetzt werden kann, und mit einem organischen Peroxid als Initiator für eine radikalische Polymerisation durch Temperaturerhöhung und anschließende Schmelzecompoundierung zur Reaktion gebracht wird.

In einer anderen Ausführungsform kann als Komponente C ein Block- oder Pfropfpolymer eingesetzt werden hergestellt durch Reaktion eines Polymers enthaltend Struktureinheiten abgeleitet von Styrol und von einem Epoxidgruppen-haltigen Vinylmonomeren mit einem OH-Gruppen enthaltenden Polymeren ausgewählt aus der Gruppe bestehend aus Polycarbonat, Polyester und Polyestercarbonat.

Bei der Herstellung der Block-oder Pfropfpolymere kann es vorkommen, dass nicht alle Polymerketten ausgewählt aus der Gruppe bestehend aus Polycarbonat, Polyester, Polyestercarbonat, Polyolefin, Polyacrylat und Polymethacrylat mit Styrol und den optional weiteren Vinylmonomeren Block-oder Pfropfpolymere bilden.

Unter der Komponente C werden in diesen Fällen auch solche Polymergemische verstanden, die durch die beschriebenen Herstellungsmethoden erhalten werden und in denen auch Homopolymere ausgewählt aus Polycarbonat, Polyester, Polyestercarbonat, Polyolefin, Polyacrylat und Polymethacrylat und den aus Styrol und den optionalen weiteren mit Styrol copolymerisierbaren Vinylmonomeren erhaltenen Styrol(co)polymeren vorliegen.

Komponente C kann auch eine Mischung mehrerer der zuvor beschriebenen Komponenten sein.

Die Komponente C weist die Komponente C ein Gewichtsverhältnis von auf Styrol zu auf Epoxidgruppen-haltigem Vinylmonomer zurückgehenden Strukturelementen von 100:1 bis 1:1, bevorzugt von 10:1 bis 1:1, weiter bevorzugt von 5:1 bis 1:1, am meisten bevorzugt von 3:1 bis 1:1 auf.

Die Komponente C weist einen Epoxidgehalt gemessen nach ASTM D 1652-11 (Version 2011) in Dichlormethan von 0,1 bis 5 Gew.-%, bevorzugt 0,3 bis 3 Gew.-%, besonders bevorzugt 1 bis 3 Gew.-% auf.

Kommerziell erhältliche Pfropf-oder Blockpolymere, die als Komponente C eingesetzt werden können, sind beispielsweise Modiper™ CL430-G Modiper™ A 4100 und Modiper™ A 4400 (jeweils NOF Corporation, Japan). Bevorzugt wird Modiper™ CL430-G eingesetzt.

### Komponente D

Die Zusammensetzung kann als Komponente D ein oder mehrere weitere Additive enthalten, bevorzugt ausgewählt aus der Gruppe bestehend aus Flammschutzmitteln, Antidrippingmitteln, Flammschutzsynergisten, Gleit- und Entformungsmitteln (beispielsweise Pentaerythrittetrastearat), Nukleiermitteln, Antistatika, Leitfähigkeitsadditiven, Stabilisatoren (z.B. Hydrolyse-, Wärmealterungs- und UV-Stabilisatoren sowie Umesterungsinhibitoren und Säure- /Basenquenchern), Fließfähigkeitspromotoren, Verträglichkeitsvermittlern, weiteren von Komponente B1 verschiedene Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Karbonfasern, Talk, Glimmer, Kaolin, CaCO₃) sowie Farbstoffen und Pigmenten (beispielsweise Titandioxid oder Eisenoxid).

Die Komponente D kann von Komponente B1 verschiedene Schlagzähmodifikatoren enthalten. Bevorzugt sind Schlagzähmodifikatoren hergestellt durch Emulsionspolymerisation mit einer Kern-Schale Struktur, weiter bevorzugt vom ABS Typ, d.h. bestehend aus einem Kern aus Polybutadienkautschuk und einer Schale aus Styrol-Acrylnitril Copolymer.

Falls solche Schlagzähmodifikatoren hergestellt durch Emulsionspolymerisation enthaltend sind, so beträgt deren Anteil höchstens 20 Gew.-%, bevorzugt höchstens 10 Gew.-%, bezogen auf die Summe der Schlagzähmodifikatoren hergestellt durch Emulsionspolymerisation und Komponente B1.

Besonders bevorzugt sind die Zusammensetzungen frei von solchen Schlagzähmodifikatoren hergestellt durch Emulsionspolymerisation.

Weiter bevorzugt enthalten sie keine von Komponente B1 verschiedene Schlagzähmodifikatoren.

In bevorzugter Ausführungsform ist die Zusammensetzung frei von Flammschutzmitteln, Antidrippingmitteln, Flammschutzsynergisten und Rauchinhibitoren.

In ebenfalls bevorzugter Ausführungsform ist die Zusammensetzung frei von Füll- und Verstärkungsstoffen.

In besonders bevorzugter Ausführungsform ist die Zusammensetzung frei von Flammschutzmitteln, Antidrippingmitteln, Flammschutzsynergisten, Rauchinhibitoren sowie Füll- und Verstärkungsstoffen.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Verträglichkeitsvermittlern, Farbstoffen und Pigmenten.

In bevorzugter Ausführungsform enthält die Zusammensetzung mindestens ein Polymeradditiv ausgewählt aus der Gruppe bestehend aus Gleit-/Entformungsmitteln und Stabilisatoren.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In besonders bevorzugter Ausführungsform enthält die Zusammensetzung als Stabilisator mindestens einen Vertreter ausgewählt aus der Gruppe bestehend aus Octadecyl 3-(3,5-di-tert-butyl-4-hydroxyphenyl)propionat und Tris(2,4-di-tert-butylphenyl)phosphit.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Weiter bevorzugte Zusammensetzungen enthalten als Entformungsmittel Pentaerythrittetrastearat, und als Stabilisator eine Kombination aus Octadecyl 3-(3,5-di-tert-butyl-4-hydroxyphenyl)propionat und Tris(2,4-di-tert-butylphenyl)phosphit.

### Herstellung der Formmassen und Formkörper

Aus den erfindungsgemäßen Zusammensetzungen können thermoplastische Formmassen hergestellt werden.
Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die Formmassen zeichnen sich durch einen geringen Gehalt an monomeren Bisphenolen, besonders an monomerem Bisphenol A aus. Der Gehalt an monomeren Bisphenolen beträgt vorzugsweise weniger als 25 ppm, weiter bevorzugt weniger als 20 ppm und besonders bevorzugt weniger als 15 ppm.

Gegenstand der Erfindung ist auch ein Verfahren zur Herstellung der erfindungsgemäßen Formmassen.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 42 der vorliegenden Erfindung beschrieben:
1. Zusammensetzung zur Erzeugung einer thermoplastischen Formmasse, wobei die Zusammensetzung folgende Bestandteile enthält oder aus diesen besteht,
   A) 30 bis 90 Gew.-% mindestens eines Polymers ausgewählt aus der Gruppe bestehend aus aromatischem Polycarbonat und aromatischem Polyestercarbonat,
   B) 5 bis 65 Gew.-% kautschukmodifiziertes Vinyl(co)polymerisat hergestellt im Massepolymerisationsverfahren, das frei ist von Epoxidgruppen,
   C) 0,5 bis 10 Gew.-% eines Block- oder Pfropfpolymers enthaltend auf Styrol und mindestens einem Epoxidgruppen-haltigem Vinylmonomer zurückgehende Strukturelemente,
   D) 0 bis 20 Gew.-% eines oder mehrerer weiterer Additive,
   wobei die Komponente C ein Gewichtsverhältnis von auf Styrol zu auf Epoxidgruppen-haltigem Vinylmonomer zurückgehenden Strukturelementen von 100:1 bis 1:1 aufweist.
2. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 10:1 bis 1:1 aufweist.
3. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 5:1 bis 1:1 aufweist
4. Zusammensetzung gemäß Ausführungsform 1, wobei die Komponente C ein Gewichtsverhältnis von auf Styrol zu auf Epoxidgruppen-haltigem Vinylmonomer zurückgehenden Strukturelementen von 3:1 bis 1:1 aufweist.
5. Zusammensetzung gemäß einer der vorherigen Ausführungsformen, wobei die Komponente A phenolische OH-Gruppen aufweist und das stöchiometrische Verhältnis der Epoxidgruppen der Komponente C zu den phenolischen OH-Gruppen der Komponente A wenigstens 1:1 beträgt.
6. Zusammensetzung gemäß einer der vorherigen Ausführungsformen, wobei die Komponente A phenolische OH-Gruppen aufweist und das stöchiometrische Verhältnis der Epoxidgruppen der Komponente C zu den phenolischen OH-Gruppen der Komponente A wenigstens 1,5:1 beträgt.
7. Zusammensetzung gemäß einer der vorherigen Ausführungsformen, wobei die Komponente A phenolische OH-Gruppen aufweist und das stöchiometrische Verhältnis der Epoxidgruppen der Komponente C zu den phenolischen OH-Gruppen der Komponente A wenigstens 2:1 beträgt.
8. Zusammensetzung gemäß einer der vorherigen Ausführungsformen, wobei die Komponente A einen Gewichtsanteil an phenolischen OH-Gruppen von 50 bis 2000 ppm aufweist.
9. Zusammensetzung gemäß einer der vorherigen Ausführungsformen, wobei die Komponente A einen Gewichtsanteil an phenolischen OH-Gruppen von 200 bis 1000 ppm aufweist.
10. Zusammensetzung gemäß einer der vorherigen Ausführungsformen, wobei die Komponente A einen Gewichtsanteil an phenolischen OH-Gruppen von 300 bis 700 ppm aufweist.
11. Zusammensetzung gemäß einer der vorherigen Ausführungsformen, wobei die Komponente C Struktureinheiten abgeleitet von einem weiteren mit Styrol copolymerisierbaren Epoxidgruppen-freien Vinylmonomeren enthält.
12. Zusammensetzung gemäß Ausführungsform 11, wobei das Gewichtsverhältnis der von Styrol zu von den mit Styrol copolymerisierbaren Epoxidgruppen-freien Vinylmonomeren abgeleiteten Struktureinheiten in Komponente C im Bereich von 85:15 bis 60:40 liegt.
13. Zusammensetzung gemäß einer der Ausführungsformen 11 oder 12, wobei Komponente C Struktureinheiten abgeleitet von Acrylnitril enthält.
14. Zusammensetzung gemäß einer der vorherigen Ausführungsformen, wobei das Epoxidgruppen-haltige Vinylmonomer Glycidylmethacrylat ist.
15. Zusammensetzung gemäß einer der vorherigen Ausführungsformen, wobei die Komponente C einen Epoxidgehalt gemessen nach ASTM D 1652-11 in Dichlormethan von 0,1 bis 5 Gew.-% aufweist.
16. Zusammensetzung gemäß einer der vorherigen Ausführungsformen, wobei die Komponente C einen Epoxidgehalt gemessen nach ASTM D 1652-11 in Dichlormethan von 0,3 bis 3 Gew.-% aufweist.
17. Zusammensetzung gemäß einer der vorherigen Ausführungsformen, wobei die Komponente C einen Epoxidgehalt gemessen nach ASTM D 1652-11 in Dichlormethan von 1 bis 3 Gew.-% aufweist.
18. Zusammensetzung gemäß einer der vorherigen Ausführungsformen, wobei als Komponente C ein Block- oder Pfropfpolymer eingesetzt wird, hergestellt durch radikalisch initiierte Polymerisation von Styrol und einem Epoxidgruppen-haltigem Vinylmonomeren und optional weiteren copolymerisierbaren Epoxidgruppen-freien Vinylmonomeren in Anwesenheit eines Polymers ausgewählt aus der Gruppe bestehend aus Polycarbonat, Polyester, Polyestercarbonat, Polyolefin, Polyacrylat und Polymethacrylat.
19. Zusammensetzung gemäß einer der Ausführungsformen 1 bis 17, wobei als Komponente C ein Block- oder Pfropfpolymer eingesetzt wird, hergestellt durch Reaktion eines Epoxidgruppen-haltigen Styrolpolymers mit einem OH-Gruppen enthaltenden Polymeren ausgewählt aus der Gruppe bestehend aus Polycarbonat, Polyester oder Polyestercarbonat.
20. Zusammensetzung gemäß einer der vorherigen Ausführungsformen, wobei die Komponente D keine Brönsted-saure oder Brönsted-basische Verbindung umfasst.
21. Zusammensetzung gemäß einer der vorherigen Ausführungsformen, wobei die Komponente C kein Pfropfpolymer mit Kern-Schale-Struktur und einer kautschukelastischen Pfropfgrundlage enthält.
22. Zusammensetzung gemäß einer der vorherigen Ausführungsformen, wobei als Komponente A aromatisches Polycarbonat auf Basis von Bisphenol A eingesetzt wird.
23. Zusammensetzung gemäß einer der vorherigen Ausführungsformen, enthaltend 40 bis 80 Gew.- % der Komponente A, 10 bis 50 Gew.-% der Komponente B, 1 bis 8 Gew.-% der Komponente C und 0,1 bis 15 Gew.-% der Komponente D.
24. Zusammensetzung gemäß einer der vorherigen Ausführungsformen, enthaltend 50 bis 75 Gew.- % der Komponente A, 15 bis 45 Gew.-% der Komponente B, 2 bis 7 Gew.-% der Komponente C und 0,2 bis 10 Gew.-% der Komponente D.
25. Zusammensetzungen gemäß einer der vorherigen Ausführungsformen, wobei die Komponente B aus den Komponenten B1 und optional B2 besteht und wobei die Komponente B1 ein kautschukhaltiges Pfropfpolymerisat oder eine Mischung aus mehreren kautschukhaltigen Pfropfpolymerisaten, jeweils hergestellt im Massepolymerisationsverfahren, ist und wobei die Komponente B2 ein kautschukfreies Vinyl(Co)Polymerisat oder eine Mischung aus mehreren kautschukfreien Vinyl(Co)Polymerisaten ist.
26. Zusammensetzung gemäß einer der vorherigen Ausführungsformen, wobei die Komponente B mindestens 50 Gew.-% an Komponente B1 enthält.
27. Zusammensetzung gemäß einer der vorherigen Ausführungsformen, wobei die Komponente B mindestens 80 Gew.-% an Komponente B1 enthält.
28. Zusammensetzung gemäß einer der vorherigen Ausführungsformen wobei die Komponente D mindestens einen Schlagzähmodifikatoren hergestellt durch Emulsionspolymerisation enthält.
29. Zusammensetzung gemäß Ausführungsform 28, wobei der Anteil von Schlägzähmodifikatoren hergestellt durch Emulsionspolymerisation höchstens 20 Gew.-% bezogen auf die Summe der Schlagzähmodifikatoren hergestellt durch Emulsionspolymerisation und Komponente B1 beträgt.
30. Zusammensetzung gemäß Ausführungsform 28, wobei der Anteil von Schlägzähmodifikatoren hergestellt durch Emulsionspolymerisation höchstens 10 Gew.-% bezogen auf die Summe der Schlagzähmodifikatoren hergestellt durch Emulsionspolymerisation und Komponente B1 beträgt.
31. Zusammensetzung gemäß einer der vorherigen Ausführungsformen, die frei sind von Schlägzähmodifikatoren hergestellt durch Emulsionspolymerisation.
32. Zusammensetzung gemäß einer der vorherigen Ausführungsformen, bestehend zu mindestens 80 Gew.-% aus den Bestandteilen A bis D.
33. Zusammensetzung gemäß einer der vorherigen Ausführungsformen, bestehend zu mindestens 90 Gew.-% aus den Bestandteilen A bis D.
34. Zusammensetzung gemäß einer der vorherigen Ausführungsformen, bestehend aus den Bestandteilen A bis D.
35. Formmasse erhalten durch Compoundieren der Bestandteile einer Zusammensetzung nach einer der Ausführungsformen 1 bis 34 bei Temperaturen im Bereich von 200 bis 350 °C.
36. Formmasse gemäß Ausführungsform 34, wobei die Compoundierung bei 240°C bis 320 °C stattfindet.
37. Formmasse gemäß Ausführungsform 34, wobei die Compoundierung bei 260° C bis 300 °C stattfindet.
38. Formmasse gemäß einer der Ausführungsformen 35 bis 37, enthaltend weniger als 25 ppm an monomeren Bisphenolen.
39. Formmasse gemäß einer der Ausführungsformen 35 bis 37, enthaltend weniger als 20 ppm an monomeren Bisphenolen.
40. Formmasse gemäß einer der Ausführungsformen 35 bis 37, enthaltend weniger als 15 ppm an monomeren Bisphenolen.
41. Verwendung einer Zusammensetzung gemäß einer der Ausführungsformen 1 bis 34 oder einer Formmassen gemäß einer der Ausführungsformen 35 bis 40 zur Herstellung von Formkörpern.
42. Formkörper erhältlich aus einer Zusammensetzung gemäß einer der Ausführungsformen 1 bis 34 oder aus einer Formmasse gemäß einer der Ausführungsformen 35 bis 40.

### Beispiele

### Komponente A:

Lineares Polycarbonat auf Basis Bisphenol-A mit einem gewichtsgemittelten Molekulargewicht M_{W} von 29.000 g/mol (bestimmt durch GPC in Methylenchlorid gegen einen BPA-PC-Standard) und einem Gewichtsanteil an phenolischen OH-Gruppen von 150 ppm.

### Komponente B-1

### Abmischung aus

50 Gew.-% eines im sauren Milieu mit Magnesiumsulfat gefällten Pfropfpolymerisats vom ABS-Typ, hergestellt durch Pfropfung im Emulsionspolymerisationsverfahren, unter Verwendung von Kaliumperoxodisulfat als Polymerisationsinitiator, von 52 Gew.-Teilen eines Gemisches aus Styrol und Acrylnitril im Gew.-%-Verhältnis von 72:28 auf 48 Gew.-Teilen eines teilchenförmigen partikulären vernetzten Polybutadienkautschuks mit einem Teilchendurchmesser bestimmt durch Ultrazentrifugation von dso = 0,3 µm
und
50 Gew.-% eines Styrol-Acrylnitril-Copolymerisats hergestellt durch Massepolymerisation von Styrol und Acrylnitril im Gew.-%-Verhältnis von 76:24, mit einem gewichtsgemittelten Molekulargewicht Mw von 100 kg/mol (bestimmt durch GPC bei 20°C in Tetrahydrofuran mit Polystyrol als Standard).

Aufgrund der Art des Aufarbeitungsverfahrens des in B-1 zum Einsatz kommenden Pfropfpolymerisats vom ABS-Typ, welches in keiner vollständigen Entfernung des Fällmediums resultiert, enthält dieses Pfropfpolymerisat Brönstedt-saure Verbindungen als herstellungsbedingte Verunreinigung.

### Komponente B-2:

### Abmischung aus

50 Gew.-% eines im basischen Milieu mit Magnesiumsulfat gefällten Pfropfpolymerisats vom ABS-Typ, hergestellt durch Pfropfung im Emulsionspolymerisationsverfahren, unter Verwendung von Kaliumperoxodisulfat als Polymerisationsinitiator, von 50 Gew.-Teilen eines Gemisches aus Styrol und Acrylnitril im Gew.-%-Verhältnis von 76:24 auf 50 Gew.-Teilen eines teilchenförmigen partikulären vernetzten Polybutadienkautschuks mit einem Teilchendurchmesser bestimmt durch Ultrazentrifugation von d₅₀ = 0,2 µm
und
50 Gew.-% eines Styrol-Acrylnitril-Copolymerisats hergestellt durch Massepolymerisation von Styrol und Acrylnitril im Gew.-%-Verhältnis von 76:24, mit einem gewichtsgemittelten Molekulargewicht Mw von 100 kg/mol (bestimmt durch GPC bei 20°C in Tetrahydrofuran mit Polystyrol als Standard).

Aufgrund der Art des Aufarbeitungsverfahrens des in B-2 zum Einsatz kommenden Pfropfpolymerisats vom ABS-Typ, welches in keiner vollständigen Entfernung des Fällmediums resultiert, enthält dieses Pfropfpolymerisat Brönstedt-basische Verbindungen als herstellungsbedingte Verunreinigung.

### Komponente B-3

Pfropfpolymerisat vom ABS-Typ, hergestellt im Massepolymerisationsverfahren, mit einem A:B:S-Verhältnis von 24:9:67 Gew.-% und mit einem Gelgehalt gemessen als in Aceton unlöslicher Anteil von 20 Gew.-%. Das per GPC mit Polystyrol als Standard in Dimethylformamid bei 20°C gemessene gewichtsgemittelte Molekulargewicht Mw des freien, d.h. nicht chemisch an den Kautschuk gebundenen bzw. in den Kautschukpartikeln in für Aceton unlöslicher Form inkludierten SANs beträgt 165 kg/mol. Die Kautschukpartikel enthalten SAN-Inklusionen und besitzen einen mittleren Teilchendurchmesser bestimmt durch Ultrazentrifugation von d₅₀=0,8 µm.

### Komponente C-1:

Modiper™ CL430-G (NOF Corporation, Japan): Pfropfcopolymer enthaltend Blöcke aus Polycarbonat und Blöcke aus Glycidylmethacrylat-Styrol-Acrylnitril-Terpolymer, welches erhalten wurde durch mit einem Peroxid initiierte radikalische Pfropfpolymerisation von 30 Gew.-% eines Monomerengemischs aus Styrol, Acrylnitril und Glycidylmethacrylat im Verhältnis 15:6:9 Gew.-% in Gegenwart von 70 Gew.-% linearem Polycarbonat auf Basis von Bisphenol A.

Der Epoxidgehalt der Komponente C gemessen nach ASTM D 1652-11 in Dichlormethan beträgt 2,4 Gew.-%.

### Komponente C-2:

Fineblend™ SAG 008 (Nantong Sunny Polymer New Material Technology Co. LTD, China): Statistisches Terpolymer hergestellt durch Polymerisation von Glycidylmethacrylat, Styrol und Acrylnitril.

Der Epoxidgehalt der Komponente C gemessen nach ASTM D 1652-11 in Dichlormethan beträgt 2,4 Gew.-%.

### Komponente D-1:

Pentaerythrittetrastearat als Gleit-/Entformungsmittel

### Komponente D-2:

Industrieruß, Black pearls™ 800 (Cabot Corporation).

### Komponenten D-3:

Thermostabilisator, Irganox™ B900 (Gemisch aus 80% Irgafos™ 168 (Tris(2,4-di-tert-butylphenyl)-phosphit) und 20% Irganox™ 1076 (2,6-Di-tert-butyl-4-(octadecanoxycarbonylethyl)-phenol); BASF (Ludwigshafen, Deutschland).

### Komponente D-4:

Ethylendiamintetraessigsäure (EDTA); Trilon™ BS, BASF (Ludwigshafen, Deutschland)

### Herstellung und Prüfung der erfindungsgemäßen Formmassen

Das Mischen der Komponenten erfolgte auf einem Zweiwellenextruder ZSK-25 der Fa. Coperion, Werner & Pfleiderer bei einer Massetemperatur von 260°C. Die Formkörper wurden bei einer Massetemperatur von 260°C und einer Werkzeugtemperatur von 80°C auf einer Spritzgießmaschine Typ Arburg 270 E hergestellt. Formkörper für die Messung des Oberflächenglanzes wurden sowohl bei einer Massetemperatur von 260°C als auch bei einer Massetemperatur von 300°C hergestellt. In den Tabellen 1 und 2 ist die jeweilige Temperatur angegeben.

Der Gehalt an freiem Bisphenol A-Monomeren wurde mittels Hochleistungsflüssigkeitschromatographie (HPLC) mit Diodenarray (DAD)-Detektor am mittels Zweiwellenextruder hergestellten Granulat bestimmt. Hierzu wurde das Granulat zunächst in Dichlormethan gelöst und dann das Polycarbonat mit Aceton/Methanol umgefällt. Das ausgefallene Polycarbonat und alle in dem Umfällungsmittel unlöslichen Anteile der Zusammensetzungen wurden abfiltriert und die Filtrate anschließend am Rotationsverdampfer bis fast zur Trockenheit eingeengt. Die Rückstände wurden mittels HPLC-DAD bei Raumtemperatur (Gradient: Acetonitril/Wasser; stationäre Phase C-18) analysiert.

Als Maß für die Chemikalienbeständigkeit diente die Spannungsriss-Beständigkeit (ESC) in Rapsöl bei Raumtemperatur. Bestimmt wurde die Zeit bis zum spannungsrissinduzierten Bruchversagen eines unter den zuvor beschriebenen Bedingungen abgespritzten Prüfkörpers der Abmessung 80 mm x 10 mm x 4 mm, der mittels einer Spannschablone mit einer externen Randfaserdehnung von 2,4 % beaufschlagt und im Medium vollständig eingetaucht war. Die Messung erfolgte gemäß DIN EN ISO 22088 (Version von 2006).

Der Oberflächenglanz wurde gemessen in Reflexion unter einem Betrachtungswinkel von 60° mit einem Glanzmessgerät vom Typ Haze-Gloss von BYK-Gardner GmbH (Geretsried, Deutschland) nach DIN 67530 (Version von 1982) an unter den zuvor beschriebenen Bedingungen abgespritzten Prüfkörpern der Abmessung 60 mm x 40 mm x 4 mm. Es wurde ein hochglanzpoliertes Spritzgusswerkzeug verwendet.

**Tabelle 1**

| **Komponente (Gew.-Teile)** | **V1** | **V2** | **V3** | **V4** | **V5** | **6** | **7** |
|---|---|---|---|---|---|---|---|
| A | 70 | 70 | 70 | 70 | 70 | 70 | 70 |
| B-1 | 30 | | | 27 | | | |
| B-2 | | 30 | | | 27 | | |
| B-3 | | | 30 | | | 27 | 27 |
| C-1 | | | | 3 | 3 | 3 | 3 |
| D-1 | 0,75 | 0,75 | 0,75 | 0,75 | 0,75 | 0,75 | 0,75 |
| D-2 | 0,50 | 0,50 | 0,50 | 0,50 | 0,50 | 0,50 | 0,50 |
| D-3 | 0,10 | 0,10 | 0,10 | 0,10 | 0,10 | 0,10 | 0,10 |
| D-4 | | | | | | | 0,003 |
| Gehalt Bisphenol A | 10 | 14 | 17 | 13 | 18 | 9 | n.g. |

| **Eigenschaften** | | | | | | | |
|---|---|---|---|---|---|---|---|
| ESC-Verhalten, Zeit bis Bruch [h] | 7 | 5 | 30 | 7 | 6 | 54 | 50 |
| Verbesserung ESC durch Zugabe C | | | | 0% | 20% | 80% | 67% |
| Glanzzahl bei 60° (260°C) | 102 | 96 | 66 | 90 | 87 | 47 | 61 |
| Glanzzahlreduktion durch Zugabe von C und D-4 | | | | 12% | 10% | 29% | 8% |

| | | | | | | | |
|---|---|---|---|---|---|---|---|
| n.g.: nicht gemessen | | | | | | | |

Die aus den erfindungsgemäßen Zusammensetzungen gemäß den Beispielen 6 und 7 hergestellten Formkörper zeichnen sich durch eine vorteilhafte Kombination aus guter Chemikalienbeständigkeit und niedrigem Oberflächenglanz aus. Dies wird offensichtlich im Vergleich zu Vergleichsbeispiel 3, das die Komponente C nicht enthält und im Vergleich zu den Vergleichsbeispielen V4 und V5, die zwar die Komponente C, aber als Komponente B kein Pfropfpolymerisat hergestellt im Massepolymerisationsverfahren enthalten. Nur bei Verwendung von der erfindungsgemäßen Komponente B (Beispiel 6 gegenüber Vergleichsbeispiel 3) wird durch die Zugabe der Komponente C eine signifikante Reduzierung des Glanzgrades sowie eine deutliche Verbesserung der Chemikalienbeständigkeit erreicht (Vergleiche V1 mit V4 und V2 mit V5).

Ein Vergleich der grundsätzlich erfindungsgemäßen Beispiele 6 und 7 verdeutlicht, dass es vorteilhaft ist, wenn die Zusammensetzungen als Komponente D keine Säure enthalten.

Die Verbesserung der Chemikalienbeständigkeit und die Reduzierung des Oberflächenglanzes gehen einher mit einem niedrigen Gehalt an monomeren Bisphenol A.

**Tabelle 2**

| **Komponente (Gew.-Teile)** | **V8** | **9** | **V10** |
|---|---|---|---|
| A | 70 | 70 | 70 |
| B-3 | 30 | 25 | 25 |
| C-1 | | 5 | |
| C-2 | | | 5 |
| D-1 | 0,75 | 0,75 | 0,75 |
| D-2 | 0,50 | 0,50 | 0,50 |
| D-3 | 0,10 | 0,10 | 0,10 |
| Gehalt Bisphenol A | 20 | 11 | 20 |

| **Eigenschaften** | | | |
|---|---|---|---|
| ESC-Verhalten, Zeit bis Bruch [h] | > 30 | > 30 | > 30 |
| Glanzzahl bei 60° (300°C) | 99 | 83 | 94 |
| Glanzzahlreduktion durch Zugabe von C | | 16% | 5% |

Die aus der erfindungsgemäßen Zusammensetzung 9 hergestellten Formkörper zeichnen sich ebenfalls durch eine gute Chemikalienbeständigkeit und einen niedrigen Oberflächenglanz aus. Mit der nicht erfindungsgemäßen Komponente C-2 wird keine ausreichende Reduktion des Glanzgrades erreicht (V10).

Die erfindungsgemäße Zusammensetzung 9 ist auch vorteilhaft hinsichtlich des Gehalts an freiem Bisphenol A.

## Patentansprüche

1. Zusammensetzung zur Erzeugung einer thermoplastischen Formmasse, wobei die Zusammensetzung folgende Bestandteile enthält oder aus diesen besteht,
A) 30 bis 90 Gew.-% mindestens eines Polymers ausgewählt aus der Gruppe bestehend aus aromatischem Polycarbonat und aromatischem Polyestercarbonat,
B) 5 bis 65 Gew.-% kautschukmodifiziertes Vinyl(co)polymerisat hergestellt im Massepolymerisationsverfahren, das frei ist von Epoxidgruppen,
C) 0,5 bis 10 Gew.-% eines Block- oder Pfropfpolymers enthaltend auf Styrol und mindestens einem Epoxidgruppen-haltigem Vinylmonomer zurückgehende Strukturelemente,
D) 0 bis 20 Gew.-% eines oder mehrerer weiterer Additive,
wobei die Komponente C ein Gewichtsverhältnis von auf Styrol zu auf Epoxidgruppen-haltigem Vinylmonomer zurückgehenden Strukturelementen von 100:1 bis 1:1 aufweist.

2. Zusammensetzung gemäß Anspruch 1, wobei die Komponente A einen Gewichtsanteil an phenolischen OH-Gruppen von 50 bis 2000 ppm aufweist.

3. Zusammensetzung gemäß Anspruch 1 oder 2, wobei die Komponente C Struktureinheiten abgeleitet von mindestens einem weiteren mit Styrol copolymerisierbaren Epoxidgruppen-freien Vinylmonomeren enthält.

4. Zusammensetzung gemäß Anspruch 3, wobei das Gewichtsverhältnis der von Styrol zu von den mit Styrol copolymerisierbaren Epoxidgruppen-freien Vinylmonomeren abgeleiteten Struktureinheiten in Komponente C im Bereich von 85:15 bis 60:40 liegt.

5. Zusammensetzung gemäß Anspruch 3 oder 4, wobei Komponente C Struktureinheiten abgeleitet von Acrylnitril enthält.

6. Zusammensetzung gemäß einem der vorherigen Ansprüche, wobei das Epoxidgruppen-haltige Vinylmonomer Glycidylmethacrylat ist.

7. Zusammensetzung gemäß einem der vorherigen Ansprüche, wobei die Komponente C einen Epoxidgehalt gemessen nach ASTM D 1652-11 in Dichlormethan von 0,1 bis 5 Gew.-% aufweist.

8. Zusammensetzung gemäß einem der vorherigen Ansprüche, wobei als Komponente C ein Block-oder Pfropfpolymer eingesetzt wird, hergestellt durch radikalisch initiierte Polymerisation von Styrol und einem Epoxidgruppen-haltigem Vinylmonomeren und optional weiteren copolymerisierbaren Epoxidgruppen-freien Vinylmonomeren in Anwesenheit eines Polymers ausgewählt aus der Gruppe bestehend aus Polycarbonat, Polyester, Polyestercarbonat, Polyolefin, Polyacrylat und Polymethacrylat.

9. Zusammensetzung gemäß einem der Ansprüche 1 bis 7, wobei als Komponente C ein Block-oder Pfropfpolymer eingesetzt wird, hergestellt durch Reaktion eines Epoxidgruppen-haltigen Styrolpolymers mit einem OH-Gruppen enthaltenden Polymeren ausgewählt aus der Gruppe bestehend aus Polycarbonat, Polyester oder Polyestercarbonat.

10. Zusammensetzung gemäß einer der vorherigen Ansprüche, die frei sind von Schlägzähmodifikatoren hergestellt durch Emulsionspolymerisation.

11. Zusammensetzung gemäß einem der vorherigen Ansprüche, wobei die Komponente D keine Brönsted-saure oder Brönsted-basische Verbindung umfasst.

12. Formmasse erhalten durch Compoundieren der Bestandteile einer Zusammensetzung nach einem der Ansprüche 1 bis 11 bei Temperaturen im Bereich von 200 bis 350 °C.

13. Formmasse gemäß Anspruch 12, enthaltend weniger als 20 ppm an monomeren Bisphenolen.

14. Verwendung einer Zusammensetzung gemäß einem der Ansprüche 1 bis 11 oder einer Formmassen gemäß einem der Ansprüche 12 und 13 zur Herstellung von Formkörpern.

15. Formkörper erhältlich aus einer Zusammensetzung gemäß einem der Ansprüche 1 bis 11 oder aus einer Formmasse gemäß einem der Ansprüche 12 und 13.

## Claims

1. Composition for production of a thermoplastic moulding compound, wherein the composition comprises or consists of the following constituents:
A) 30% to 90% by weight of at least one polymer selected from the group consisting of aromatic polycarbonate and aromatic polyester carbonate,
B) 5% to 65% by weight of rubber-modified vinyl (co)polymer prepared by the bulk polymerization method and which is free of epoxy groups,
C) 0.5% to 10% by weight of a block or graft polymer containing structural elements deriving from styrene and at least one epoxy-containing vinyl monomer,
D) 0% to 20% by weight of one or more further additives,
wherein component C has a weight ratio of structural elements deriving from styrene to those deriving from epoxy-containing vinyl monomer of 100:1 to 1:1.

2. Composition according to Claim 1, wherein component A has a proportion by weight of phenolic OH groups of 50 to 2000 ppm.

3. Composition according to Claim 1 or 2, wherein component C contains structural units derived from at least one further styrene-copolymerizable vinyl monomer free of epoxy groups.

4. Composition according to Claim 3, wherein the weight ratio of the structural units derived from styrene to those derived from styrene-copolymerizable vinyl monomer free of epoxy groups in component C is in the range from 85:15 to 60:40.

5. Composition according to Claim 3 or 4, wherein component C contains structural units derived from acrylonitrile

6. Composition according to any of the preceding claims, wherein the epoxy-containing vinyl monomer is glycidyl methacrylate.

7. Composition according to any of the preceding claims, wherein component C has an epoxy content measured according to ASTM D 1652-11 in dichloromethane of 0.1% to 5% by weight.

8. Composition according to any of the preceding claims, wherein component C used is a block or graft polymer prepared by free-radically initiated polymerization of styrene and an epoxy-containing vinyl monomer and optionally further copolymerizable vinyl monomers free of epoxy groups in the presence of a polymer selected from the group consisting of polycarbonate, polyester, polyester carbonate, polyolefin, polyacrylate and polymethacrylate.

9. Composition according to any of Claims 1 to 7, wherein component C used is a block or graft polymer prepared by reaction of an epoxy-containing styrene polymer with a polymer containing OH groups which is selected from the group consisting of polycarbonate, polyester and polyester carbonate.

10. Composition according to any of the preceding claims, which is free of impact modifiers produced by emulsion polymerisation.

11. Composition according to any of the preceding claims, wherein component D does not comprise any Bronsted-acidic or Bronsted-basic compound.

12. Moulding compound obtained by compounding the constituents of a composition according to any of Claims 1 to 11 at temperatures in the range from 200 to 350°C.

13. Moulding compound according to Claim 12, containing less than 20 ppm of monomeric bisphenols.

14. Use of a composition according to any of Claims 1 to 11 or of a moulding compound according to either of Claims 12 and 13 for production of mouldings.

15. Moulding obtainable from a composition according to any of Claims 1 to 11 or from a moulding compound according to either of Claims 12 and 13.

## Revendications

1. Composition pour la production d'une masse à mouler thermoplastique, la composition contenant les ingrédients suivants ou étant constituée de ceux-ci,
A) 30 à 90 % en poids d'au moins un polymère choisi dans le groupe constitué par un polycarbonate aromatique et un polyestercarbonate aromatique,
B) 5 à 65 % en poids de (co)polymérisat vinylique modifié par un caoutchouc préparé dans un procédé de polymérisation en masse, qui est exempt de groupes époxyde,
C) 0,5 à 10 % en poids d'un polymère à blocs ou greffé contenant des éléments structuraux provenant du styrène et d'au moins un monomère vinylique contenant des groupes époxyde,
D) 0 à 20 % en poids d'un ou plusieurs additifs supplémentaires,
le composant C présentant un rapport pondéral d'éléments structuraux provenant du styrène et provenant d'un monomère vinylique contenant des groupes époxyde de 100:1 à 1:1.

2. Composition selon la revendication 1, le composant A présentant une proportion en poids de groupes OH phénoliques de 50 à 2 000 ppm.

3. Composition selon la revendication 1 ou 2, le composant C contenant des motifs structuraux issus d'au moins un monomère vinylique supplémentaire, exempt de groupes époxyde, copolymérisable avec le styrène.

4. Composition selon la revendication 3, le rapport pondéral des motifs structuraux issus du styrène sur ceux issus des monomères vinyliques, exempts de groupes époxyde, copolymérisables avec le styrène dans le composant C se situant dans la plage de 85:15 à 60:40.

5. Composition selon la revendication 3 ou 4, le composant C contenant des motifs structuraux issus de l'acrylonitrile.

6. Composition selon l'une quelconque des revendications précédentes, le monomère vinylique contenant des groupes époxyde étant le méthacrylate de glycidyle.

7. Composition selon l'une quelconque des revendications précédente, le composant C présentant une teneur en époxyde mesurée selon la norme ASTM D 1652-11 dans le dichlorométhane de 0,1 à 5 % en poids.

8. Composition selon l'une quelconque des revendications précédentes, un polymère à blocs ou greffé étant utilisé en tant que composant C, qui est préparé par polymérisation initiée de manière radicalaire de styrène et d'un monomère vinylique contenant des groupes époxyde et éventuellement de monomères vinyliques copolymérisables supplémentaires, exempts de groupes époxyde, en présence d'un polymère choisi dans le groupe constitué par un polycarbonate, un polyester, un polyestercarbonate, une polyoléfine, un polyacrylate et un polyméthacrylate.

9. Composition selon l'une quelconque des revendications 1 à 7, un polymère à blocs ou greffé étant utilisé en tant que composant C, qui est préparé par réaction d'un polymère de styrène contenant des groupes époxyde avec un polymère contenant des groupes OH choisi dans le groupe constitué par un polycarbonate, un polyester et un polyestercarbonate.

10. Composition selon l'une quelconque des revendications précédentes, qui est exempte de modificateurs de résistance aux chocs préparés par polymérisation en émulsion.

11. Composition selon l'une quelconque des revendications précédentes, le composant D ne comprenant aucun composé acide au sens de Brønsted ou basique au sens de Brønsted.

12. Masse à mouler obtenue par compoundage des ingrédients d'une composition selon l'une quelconque des revendications 1 à 11 à des températures dans la plage de 200 à 350 °C.

13. Masse à mouler selon la revendication 12, contenant moins de 20 ppm de bisphénols monomériques.

14. Utilisation d'une composition selon l'une quelconque des revendications 1 à 11 ou d'une masse à mouler selon l'une quelconque des revendications 12 et 13 pour la préparation de corps moulés.

15. Corps moulé pouvant être obtenu à partir d'une composition selon l'une quelconque des revendications 1 à 11 ou d'une masse à mouler selon l'une quelconque des revendications 12 et 13.
